# DEMANDE DE BREVET EUROPEEN

(11) **EP 2 292 365 A1**
(43) Date de publication de la demande: **09.03.2011**
(21) Numéro de dépôt: 10172646.1
(22) Date de dépôt: 12.08.2010
(51) Int. Cl.: B23K 9/12

(54) **Dispositif et procédé de dévidage d'au moins un fil de soudage**

(30) Priorité: 27.08.2009 FR 0955840
(71) Demandeur: L'AIR LIQUIDE, Société Anonyme pour l'Etude et l'Exploitation des Procédés Georges Claude, 75007 Paris (FR); Air Liquide Welding France, 75007 Paris (FR)
(72) Inventeur: Gadrey, Sébastien, 58230 Gouloux (FR); Chevalier, Richard, 95300 Pontoise (FR); Azuelos, Maxime, 95310 Saint Ouen l'Aumone (FR)
(74) Mandataire: Pittis, Olivier

(57) **Abrégé**

Dispositif de dévidage d'au moins un fil de soudage (7) comprenant au moins deux galets d'entraînement (6a,6b), un moteur d'entraînement (4) en rotation d'au moins un desdits galets et un système d'embrayage/débrayage (16) apte et conçu pour agir sur au moins l'un desdits galets d'entraînement de manière à rapprocher/écarter lesdits galets d'entraînement relativement l'un par rapport à l'autre, caractérisé en ce qu'il comprend au moins un actionneur (10) apte et conçu pour actionner ledit système d'embrayage/débrayage de manière répétitive et des moyens de pilotage (9) dudit actionneur aptes et conçus pour agir sur ledit actionneur à une fréquence supérieure à 1 Hz.

## Description

L'invention concerne un dispositif et un procédé de dévidage d'au moins un fil de soudage, ainsi qu'un procédé de soudage intégrant ce dispositif.

De nombreux procédés de soudage, notamment le soudage à l'arc, le soudage laser ou le soudage hybride arc/laser, nécessitent d'ajouter un métal d'apport se présentant sous la forme d'un fil métallique, d'un ruban de métal, etc., que l'on introduit au moyen d'un dispositif de dévidage approprié dans le bain de fusion. Le terme de « fil » que l'on emploie ici vise à englober toutes les mises en forme équivalentes du matériau d'apport. Ce fil doit être dévidé à une vitesse adaptée au procédé de soudage utilisé et aux conditions opératoires.

Par exemple, dans les procédés MIG/MAG classiques, le fil avance à une vitesse constante, de l'ordre de 1 à 20 mètre/minute. La rotation des galets, entraînés par un ou des moteurs, associée à une pression suffisante sur le fil (adaptée au matériau du fil et à sa forme) assure un entraînement du fil sans glissement. Les dévidoirs « classiques » utilisent une technologie de moteur à courant continu (ou DC, pour « direct current »). Ces moteurs permettent un arrêt du fil en environ 200 ms (millisecondes) pour un dévidage à 10 mètre/minute.

Des innovations récentes, en particulier dans les procédés MIG/MAG, ont montré l'intérêt de contrôler avec précision la vitesse d'avance du fil et en particulier de la faire varier très rapidement, notamment pour favoriser le détachement des gouttes de métal en fusion. Le problème est alors d'obtenir un arrêt du fil dans un laps de temps très court, de l'ordre de 2 ms, afin d'utiliser la décélération du fil comme vecteur de détachement. Il est donc nécessaire de disposer d'un système de dévidage du fil possédant une réactivité de l'ordre de la milliseconde, soit cent fois plus importante que celle des moteurs classiques DC. Différents solutions permettent d'atteindre cette réactivité.

Le document FR-A-2923167 décrit un procédé DCSC (pour « Dual Control Short Circuit » ou Court circuit contrôlé de manière duale, c'est à dire électriquement et mécaniquement) où le dévidoir est équipé d'un moteur de type « brushless » (sans balai), à faible inertie et présentant une réactivité importante s'il est correctement alimenté et contrôlé. Les moteurs offrant ces caractéristiques sont typiquement les moteurs « brushless » ou pas-à-pas. Ceux-ci ont des propriétés intéressantes d'accélération et de décélération, associées à une durée de vie relativement longue. Malheureusement, ils sont assez encombrants et lourds, ce qui pose un problème de transfert pour les applications manuelles, notamment en raison du poids de la torche de soudage. Ils supposent aussi souvent d'utiliser un moteur supplémentaire pour amener le fil à la torche.

Dans le document EP-B-1268111, il est proposé de modifier la vitesse du fil, non pas en modifiant la vitesse des moteurs d'entraînement, mais en imprimant un mouvement de va-et-vient à une platine supportant les galets d'entraînement. Ce mouvement en bloc modifie la trajectoire du fil sans changer les autres paramètres de son entraînement. Les oscillations de la longueur parcourue par le fil avant sa sortie se traduisent alors par une vitesse de sortie oscillante du fil. Cette solution séduisante ne permet toutefois pas d'atteindre des fréquences élevées, requises notamment par le procédé DCSC. De plus, elle nécessite l'emploi d'une grande quantité de pièces mécaniques, ce qui peut entraîner des jeux et une usure prématurée. Elle provoque aussi des vibrations de l'appareil soutenant le dévidoir. Le profil de vitesse obtenu pour le fil est limité à une forme essentiellement sinusoïdale; il ne peut pas contenir d'harmoniques élevés.

La solution envisagée dans le document EP-B-1182001 consiste également à modifier la trajectoire du fil, mais cette fois en le poussant directement dans le sens latéral, sur une certaine distance, grâce à des actionneurs piézoélectriques. Ceci diminue la vitesse fil pendant un laps de temps court durant la période de court-circuit du procédé de soudage. Cette solution comporte néanmoins plusieurs inconvénients : une augmentation importante de la vitesse fil pendant la période d'arc, correspondant au relâchement du système, et une modification de la vitesse du fil finalement assez limitée en intensité et/ou en durée, le déplacement latéral du fil ayant lui-même des limites fixées par la géométrie du dispositif de soudage.

Un but de la présente invention est de pallier tout ou partie des inconvénients signalés ci-dessus, c'est à dire en particulier d'obtenir un dévidage du fil de soudage adapté à différents procédés de soudage, notamment le procédé DCSC, autorisant une diminution rapide de la vitesse de sortie, le tout sans recourir à des dispositifs encombrants ou coûteux.

A cette fin, l'invention concerne un dispositif de dévidage d'au moins un fil de soudage comprenant :
- au moins deux galets d'entraînement dudit fil de soudage ;
- un moteur d'entraînement en rotation d'au moins un desdits galets ; et
- un système d'embrayage/débrayage apte et conçu pour agir sur au moins l'un desdits galets d'entraînement de manière à rapprocher/écarter lesdits galets d'entraînement relativement l'un par rapport à l'autre ;
   **caractérisé en ce qu**'il comprend :
- au moins un actionneur apte et conçu pour actionner ledit système d'embrayage/débrayage de manière répétitive ; et
- des moyens de pilotage dudit actionneur, aptes et conçus pour agir sur ledit actionneur à une fréquence supérieure à 1 Hz.

Le dispositif comporte un ou plusieurs fil de soudage. Le terme de « fil » que l'on emploie ici vise à englober toutes les mises en forme équivalentes du matériau d'apport, notamment un ruban. Ces fils peuvent être de différentes natures et avoir différentes formes : cylindrique, aplatie, etc. Les galets d'entraînement sont au moins au nombre de deux. L'un des deux au moins est entraîné en rotation par un moteur. L'autre peut ne pas être entraîné et reste libre sur son axe de rotation ; on parle alors de « galet fou ». Ces deux galets sont agencés selon des modalités connues de l'homme du métier pour pouvoir, en position embrayée, entraîner le fil, a priori sans glissement. Les galets peuvent comporter une ou plusieurs gorges permettant d'épouser la forme du ou des fils de soudage et de les guider pour favoriser leur entraînement.

Un système d'embrayage/débrayage permet de rapprocher ou écarter relativement au moins l'un des galet de l'autre, de sorte qu'en position écartée la fonction d'entraînement n'est plus assurée. Il suffit en général d'écarter l'un des galets d'environ 0.2 mm. Le fil n'est alors plus soumis qu'à une force résistante due aux frottements dans les différents moyens de guidage et à son inertie (négligeable). Il en résulte une chute rapide de la vitesse du fil.

Le système d'embrayage/débrayage peut concerner un seul ou bien plusieurs galets, entraînés par un ou plusieurs moteurs, ou non. Le système d'embrayage/débrayage est mis en mouvement par au moins un actionneur apte et conçu pour agir répétitivement. Cet actionneur est connecté à des moyens de pilotage destinés à l'activer de manière répétitive, par exemple une carte de commande électrique. Par ses mouvements, l'actionneur est destiné à provoquer notamment l'embrayage ou le débrayage du système d'embrayage/débrayage des galets. Les mouvements d'embrayage, puis de débrayage, se succèdent selon une cadence voulu par le procédé de soudage, de manière à obtenir le profil de vitesse de sortie du fil de soudage requis. Cette cadence est au moins égale à 1 Hz (herz). Pour donner un sens précis à cette cadence, on peut la définir comme la fréquence à laquelle un même mouvement d'embrayage est effectué. Cette cadence peut d'ailleurs varier dans le temps.

Pour le procédé DCSC, on amorce le débrayage au début ou peu après le début de la phase de court-circuit, tandis qu'on ré-embraye au début ou peu après le début de la phase d'arc suivante, et ainsi de suite.

Cet embrayage/débrayage actionné répétitivement ne doit pas être confondu avec le déplacement d'un ou plusieurs galets opéré, en général manuellement, de temps en temps, pour installer ou enlever le fil de soudage du dispositif de dévidage. Il s'agit ici de petits déplacements, typiquement de moins de 1 mm, à intervalles de temps très courts, de l'ordre de la milliseconde.

Par rapport aux dispositifs existants, un avantage de l'invention est que l'interruption et la reprise de l'entraînement du fil de soudage se font d'une manière mécaniquement douce. Il n'y a pas de mouvements discontinus du ou des moteurs d'entraînement, d'où un gain en coût et en fiabilité. Le ou les moteurs peuvent entraîner en continu le ou les galets. En outre, l'inertie du fil étant faible, l'interruption et la reprise de l'entraînement sont rapides, de l'ordre de quelques millisecondes.

Par ailleurs, selon des modes de réalisation préférés, le dispositif selon l'invention peut comporter l'une ou plusieurs des caractéristiques suivantes :
- ledit actionneur comporte des éléments piézoélectriques et lesdits moyens de pilotage dudit actionneur comportent un circuit électrique apte et destiné à provoquer des déformations desdits éléments piézoélectriques.
- ledit actionneur comporte une armature déformable sélectivement en au moins deux configurations et reliée mécaniquement par ledit système d'embrayage/débrayage à au moins l'un desdits galets d'entraînement.
- lesdits moyens de pilotage dudit actionneur sont aptes et conçus pour fonctionner à une fréquence comprise entre 10 et 1000 Hz.

L'intérêt des éléments piézoélectriques réside dans leur temps de réponse court, leur bonne fiabilité et leur durée de vie assez longue. Ils sont facilement commandés électriquement, selon des modalités connues de l'homme du métier. Ils permettent un embrayage/débrayage des galets extrêmement rapide, compatible avec les temps d'arrêt de fil recherchés, de l'ordre de deux millisecondes. De manière préférée, la fréquence de fonctionnement est comprise entre 50 et 200 Hz, en particulier pour le procédé de soudage DCSC.

Les éléments piézoélectriques sont en général montés en série de façon à obtenir une déformation suffisante de l'ensemble. Ils peuvent écarter directement sous l'effet de leur déformation un ou plusieurs galets d'entraînement par transmission mécanique du mouvement. Ils peuvent aussi être enchâssés dans une armature ayant pour rôle notamment d'ajuster ou de démultiplier leur déformation. Par exemple, ils peuvent être montés sur la diagonale d'un losange articulé, leur contraction provoquant un allongement du losange dans le sens de son autre diagonale. Cet allongement est ensuite converti par une transmission mécanique en un déplacement d'au moins un galet.

Il est clair que la déformation des éléments piézoélectrique peut être convertie en un déplacement d'un ou plusieurs galets par un système d'embrayage/débrayage selon un grand nombre de manières connues de l'homme du métier. Une des plus simples est de réaliser un système de levier permettant de soulever l'un des galets.

Le dispositif selon l'invention peut tout à fait être adapté aux procédés MIG et TIG en isolant convenablement le système piézoélectrique, afin de s'affranchir des perturbations électriques générées par la tension haute fréquence utilisée dans ces procédés pour l'amorçage de l'arc.

Selon un mode particulier, lesdits moyens de pilotage dudit actionneur sont aptes et conçus pour fonctionner à une fréquence comprise entre 50 et 200 Hz.

L'invention concerne aussi un dispositif de soudage à l'arc **caractérisé en ce qu**'il comporte un dispositif de dévidage d'au moins un fil de soudage tel que décrit ci-dessus.

L'invention concerne aussi un procédé de dévidage d'au moins un fil de soudage mettant en oeuvre au moins un fil de soudage, au moins deux galets d'entraînement dudit fil de soudage, l'un au moins desdits galets étant entraîné en rotation par un moteur, **caractérisé en ce qu**'il comprend au moins les étapes suivantes se répétant à une fréquence supérieure à 1 Hz :
a) on rapproche relativement lesdits galets d'entraînement l'un par rapport à l'autre de manière à entraîner ledit fil ; et
b) on écarte relativement lesdits galets d'entraînement l'un par rapport l'autre de manière à ne pas entraîner ledit fil.

A l'étape a), la fonction d'entraînement du fil par les galets démarre rapidement après que les galets ont été placés en contact avec le fil de soudage. On vise en général un frottement sans glissement. Des moyens assurant une pression des galets sur le fil peuvent s'avérer utiles, par exemple un ressort permettant de coller un ou des galets au fil avec une pression donnée.

Ensuite, à l'étape b), la fonction d'entraînement des galets est interrompue en écartant le ou les galets l'un de l'autre, de sorte qu'il n'y a plus une pression suffisante sur le fil. Un écartement de l'ordre de 0.2 mm est en général suffisant. Le fil, n'étant plus soumis qu'à son inertie et aux frottements, s'arrête rapidement.

L'entraînement d'un ou plusieurs galets par un ou des moteurs n'est a priori pas affecté par les étapes du procédé. Il est de préférence continu. On peut toutefois imaginer de panacher le procédé selon l'invention (où l'entraînement discontinu du fil est obtenu en décollant et en recollant un ou des galets) avec des procédés classiques (où l'entraînement des galets en rotation est discontinu, ou bien où la longueur de la course du fil de soudage est modifiée cycliquement).

Les étapes du procédé se succèdent de manière répétitive, en général cyclique. Elles sont synchronisées avec les paramètres électriques du procédé de soudage (court-circuit, phase d'arc, etc.) selon des modalités connues de l'homme du métier.

Par ailleurs, selon des modes de réalisation particuliers, le procédé selon l'invention peut comporter l'une ou plusieurs des caractéristiques suivantes :
- on obtient le rapprochement, respectivement l'écartement, desdits galets d'entraînement opérés aux étapes a), respectivement b), par un système d'embrayage/débrayage d'au moins un des galets d'entraînement, ledit système d'embrayage/débrayage étant actionné par au moins un actionneur comportant des éléments piézoélectriques sélectivement commandés.
- lesdites étapes a) et b) se répètent à une fréquence comprise entre 10 et 1000 Hz.
- durant l'étape a), on soumet lesdits éléments piézoélectriques à une première tension électrique donnée, de préférence nulle.
- durant l'étape b), on soumet lesdits éléments piézoélectriques à une seconde tension électrique, supérieure à ladite première tension.

Les éléments piézoélectriques, par leur déformations contrôlées électriquement, provoquent le mouvement de l'actionneur connecté au système d'embrayage-débrayage des galets. Ledit actionneur peut comporter une armature déformable présentant au moins deux configurations possibles en fonction de l'état de tension desdits éléments piézoélectriques.

Selon un mode préféré de réalisation, ledit premier état de tension correspond à une tension nulle et les éléments piézoélectriques sont au repos (non-contractés). Le second état de tension correspond alors à une mise en tension des éléments piézoélectriques, qui se contractent. L'actionneur, éventuellement via une armature, va alors provoquer le débrayage. A contrario, on pourrait concevoir un actionneur où le débrayage serait provoqué par le retour au repos, i. e. le relâchement des éléments piézoélectriques, mais cette solution apparaît moins avantageuse, car, dans la plupart des procédés de soudage, les périodes de débrayage (vitesse nulle du fil) sont en général plus courtes que les périodes d'embrayage (entraînement du fil). Il y a alors un avantage certain à faire correspondre les périodes d'entraînement du fil de soudage avec la mise au repos des éléments piézoélectriques de l'actionneur (tension nulle).

L'invention concerne aussi un procédé de soudage à l'arc mettant en oeuvre au moins un fil de soudage, **caractérisé en ce qu**'on dévide ledit fil par un procédé tel que décrit ci-dessus. Selon un mode particulier, le procédé de soudage est le procédé DCSC déjà évoqué.

Selon un mode particulier, lesdites étapes a) et b) se répètent à une fréquence comprise entre 50 et 200 Hz, par exemple pour un procédé de soudage DCSC.

D'autres particularités et avantages apparaîtront à la lecture de la description ci-après, faite en référence aux figures dans lesquelles :
- la figure 1 représente une vue schématique illustrant la structure et le fonctionnement d'un dispositif de soudage incorporant un système de dévidage selon l'invention ;
- la figure 2A représente un schéma-principe d'un dispositif de dévidage selon l'invention en position embrayée (avec entraînement du fil) ;
- la figure 2B représente le même schéma principe, mais en position débrayée (sans entraînement du fil) ;
- les figures 3a, 3b, 3c représentent, en fonction du temps, l'intensité et la tension de soudage, ainsi que la vitesse de sortie du fil dans un procédé de soudage de type DCSC, pour lequel le dispositif et le procédé de dévidage selon l'invention sont particulièrement bien adaptés.

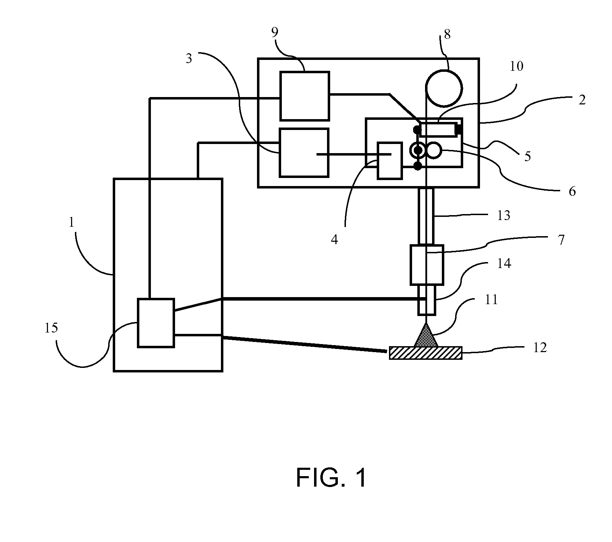

Sur la figure 1, le dispositif de soudage fonctionne par exemple selon le procédé DCSC. Il est alimenté en courant et tension par un générateur 1 pour former un arc 11 entre un fil fusible 7 et une pièce à souder 12. Le générateur 1 commande un dévidoir 2 grâce à deux cartes 3 et 9. La carte électronique 3 commande un moteur 4 d'entraînement de la platine de dévidage 5 où sont placés les galets de dévidage 6 servant à entraîner un fil fusible 7 qui se dévide de la bobine 8. Le fil fusible 7 est alors entraîné à travers une gaine 13 puis une torche de soudage 14 afin d'alimenter l'arc 11 en métal d'apport. Le générateur 1 comprend une carte électronique 15 dont une fonction est de détecter un court-circuit entre le fil de soudage 7 et la pièce à souder 12. Dans ce cas, un signal est envoyé à la carte électronique 9 qui commande alors l'écartement des galets 6 grâce à un actionneur piézoélectrique 10. Ceci a pour effet d'interrompre l'entraînement du fil fusible 7. Inversement, lorsque la carte 15 détecte la fin du court-circuit, elle envoie un signal à la carte 9 qui commande alors le rapprochement des galets 6 par l'intermédiaire de l'actionneur 10, ce qui a pour effet de reprendre l'entraînement du fil 7.

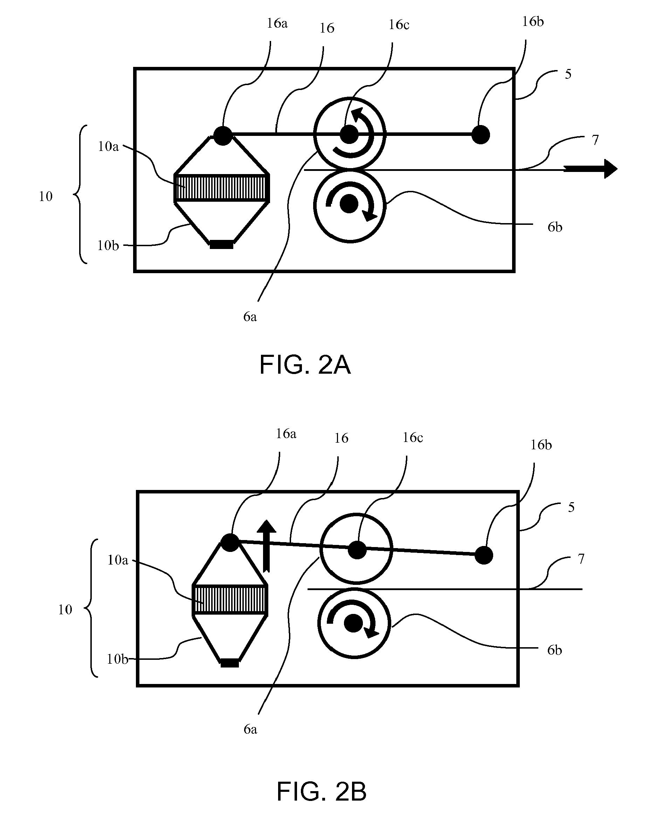

Sur les figures 2A et 2B, on retrouve la platine de dévidage 5 de la figure 1. Celle-ci comprend deux galets d'entraînement 6a et 6b du fil 7. Le galet 6b est entraîné par le moteur 4 (non représenté), tandis que le galet 6a est un « galet fou » (non-entraîné), tournant librement sur un axe 16c. L'actionneur piézoélectrique 10 est connecté par un système d'embrayage/débrayage 16 au galet 6a. Cette connexion prend la forme d'un levier capable de soulever légèrement l'axe de rotation 16c du galet 6a. Le point 16b est fixe, tandis que le point 16a est mobile en fonction de l'état de l'actionneur piézoélectrique 10. Un dispositif de réglage automatique ou manuel (non-représenté) de la position du galet au repos et/ou d'un point d'encrage de l'actionneur 10 peut-être ajouté afin de régler les paramètres du contact galet/fil en fonction des conditions extérieures rencontrées, notamment l'évolution de la température du dispositif.

Sur la figure 2A, l'actionneur 10 est au repos, en position fléchie. Il se présente sous la forme d'un losange 10b articulé ou simplement plastique, dont les éléments piézoélectriques montés en série occupent une diagonale. Les galets 6 sont en contact avec le fil 7 qui est entraîné.

Sur la figure 2B, l'actionneur 10 est actif, en extension. Les éléments piézoélectriques 10a se sont rétrécis, provoquant un allongement du losange lOb dans le sens de son autre diagonale. Cet allongement est utilisé pour soulever le point 16a, le losange étant par ailleurs fixé à un châssis par un point d'encrage. Ce mouvement du levier 16 vient décoller le galet 6a du galet 6b. Le fil 7 cesse d'être entraîné.

On comprend donc que le dispositif peut être embrayé ou débrayé en fonction de l'état électrique des éléments piézoélectriques 10a. Pour réaliser l'étape a) du procédé de dévidage, on cesse d'activer électriquement ces éléments et leur relâchement provoque un rapprochement du galet 6a du fil 7. La fonction d'entraînement du fil 7 par le galet 6a démarre. Pour réaliser l'étape b), on active électriquement les éléments 10a. Ceux-ci se contractent. L'armature 10b s'allonge de manière à écarter le galet 6a.

Il peut être utile d'ajouter un système de rappel (non-représenté sur les figures) ayant pour fonction de permettre ou de faciliter le retour à la position embrayée du galet 6a ou bien pour assurer que le galet 6a exerce une pression suffisante sur le fil 7 pour assurer son entraînement sans glissement. Cette pression est un paramètre connu de l'homme du métier.

Dans l'exemple, l'actionneur piézoélectrique 10 doit avoir un déplacement suffisant, d'environ 0.2 mm, et pouvoir développer une force d'environ 200 N (newton) tout en déplaçant une masse de 200 g (gramme). De plus, il doit pouvoir réaliser le mouvement d'embrayage/débrayage à une fréquence comprise entre 10 et 1000 Hz, de préférence de l'ordre de 100 Hz.

L'actionneur piézoélectrique 10 est par exemple commandé à l'aide d'une carte électronique 9 fournissant une tension de 150V et un courant de 10A. Il se comporte comme un condensateur. Il se charge et se décharge à travers une résistance qui sert à limiter le courant. L'actionneur est alimenté par le réseau électrique, qui est transformé, puis redressé et enfin filtré, afin d'obtenir une tension continue de 150V. Deux MOSFET en cascade peuvent assurer la commande du système piézoélectrique. Le premier commande sa charge et le deuxième sa décharge.

La fréquence maximale de fonctionnement est une caractéristique intrinsèque importante de l'actionneur piézoélectrique. On souhaite en général l'utiliser à une fréquence de l'ordre de 100 Hz. L'homme du métier sait qu'il faut choisir un actionneur dont la fréquence de résonance soit plus élevée que la fréquence de fonctionnement visée et différente d'un multiple de celle-ci, afin de ne pas endommager l'actionneur.

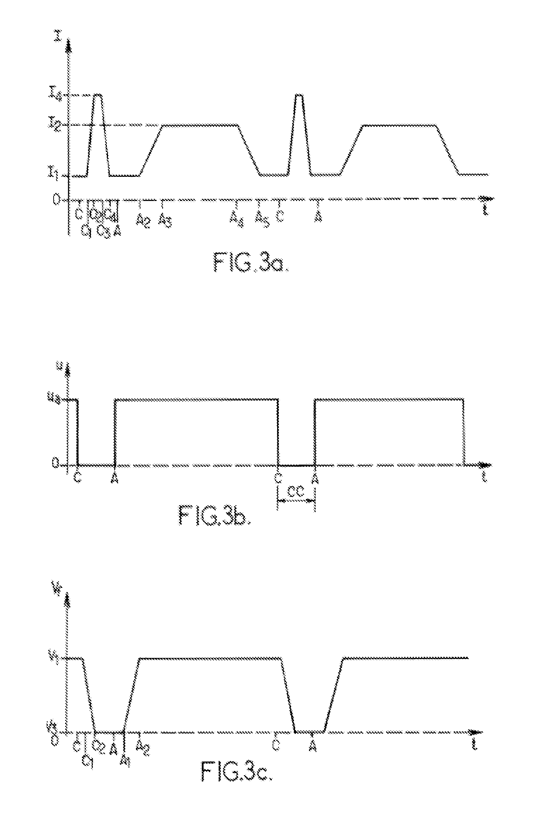

Sur la figure 3, on a représenté l'intensité I et la tension U, ainsi que la vitesse de sortie V_{f} du fil de soudage 7 dans un procédé de type DCSC tel que décrit dans le document FR-A-2923167 dans lequel on a ajouté un dispositif de dévidage selon l'invention. La carte électronique 15 détecte les phases C-A de court-circuit et A-C d'arc visibles sur la figure 3b. La carte 9 commande de manière synchronisée avec la carte 15 le système piézoélectrique 10 de façon à obtenir le débrayage du galet 6a au début ou peu après le début de la phase de court-circuit (point Cl de la figure 3c) et son embrayage au début ou peu après de la phase d'arc (point A1 de la figure 3c).

## Revendications

1. Dispositif de dévidage d'au moins un fil de soudage (7) comprenant :
- au moins deux galets d'entraînement (6a, 6b) dudit fil de soudage (7) ;
- un moteur (4) d'entraînement en rotation d'au moins un desdits galets (6b) ; et
- un système d'embrayage/débrayage (16) apte et conçu pour agir sur au moins l'un desdits galets d'entraînement (6a) de manière à rapprocher/écarter lesdits galets d'entraînement (6a, 6b) relativement l'un par rapport à l'autre ;
**caractérisé en ce qu'**il comprend :
- au moins un actionneur (10) apte et conçu pour actionner ledit système d'embrayage/débrayage (16) de manière répétitive ; et
- des moyens de pilotage (9) dudit actionneur (10), aptes et conçus pour agir sur ledit actionneur (10) à une fréquence supérieure à 1 Hz.

2. Dispositif selon la revendication 1, **caractérisé en ce que** ledit actionneur (10) comporte des éléments piézoélectriques (10a) et lesdits moyens de pilotage (9) dudit actionneur (10) comportent un circuit électrique apte et destiné à provoquer des déformations desdits éléments piézoélectriques (10a).

3. Dispositif selon la revendication 2, **caractérisé en ce que** ledit actionneur (10) comporte une armature (10b) déformable sélectivement en au moins deux configurations et reliée mécaniquement par ledit système d'embrayage/débrayage (16) à au moins l'un desdits galets d'entraînement (6a).

4. Dispositif selon l'une quelconque des revendications 1 à 3, **caractérisé en ce que** lesdits moyens de pilotage (9) dudit actionneur (10) sont aptes et conçus pour fonctionner à une fréquence comprise entre 10 et 1000 Hz.

5. Dispositif de soudage à l'arc, **caractérisé en ce qu'**il comporte un dispositif de dévidage d'au moins un fil de soudage (7) selon l'une quelconque des revendications 1 à 4.

6. Procédé de dévidage d'au moins un fil de soudage (7) mettant en oeuvre au moins un fil de soudage (7), au moins deux galets d'entraînement (6a, 6b) dudit fil de soudage (7), l'un au moins desdits galets (6b) étant entraîné en rotation par un moteur (4), **caractérisé en ce qu'**il comprend au moins les étapes suivantes se répétant à une fréquence supérieure à 1 Hz :
a) on rapproche relativement lesdits galets d'entraînement (6a, 6b) l'un par rapport à l'autre de manière à entraîner ledit fil (7) ; et
b) on écarte relativement lesdits galets d'entraînement (6a, 6b) l'un par rapport l'autre de manière à ne pas entraîner ledit fil (7).

7. Procédé selon la revendication 6, **caractérisé en ce qu'**on obtient le rapprochement, respectivement l'écartement, desdits galets d'entraînement (6a, 6b) opérés aux étapes a), respectivement b), par un système d'embrayage/débrayage (16) d'au moins un des galets d'entraînement (6a), ledit système d'embrayage/débrayage (16) étant actionné par au moins un actionneur (10) comportant des éléments piézoélectriques (10a) sélectivement commandés.

8. Procédé selon la revendication 7, **caractérisé en ce que** lesdites étapes a) et b) se répètent à une fréquence comprise entre 10 et 1000 Hz.

9. Procédé selon l'une quelconque des revendications 7 ou 8, **caractérisé en ce que** :
- durant l'étape a), on soumet lesdits éléments piézoélectriques (10a) à une première tension électrique donnée, de préférence nulle ; et
- durant l'étape b), on soumet lesdits éléments piézoélectriques (l0a) à une seconde tension électrique, supérieure à ladite première tension.

10. Procédé de soudage à l'arc mettant en oeuvre au moins un fil de soudage (7), **caractérisé en ce qu'**on dévide ledit fil (7) par un procédé selon l'une quelconque des revendications 6 à 9.
